# EUROPÄISCHE PATENTSCHRIFT

(11) **EP 1 667 169 B1**
(45) Veröffentlichungstag und Bekanntmachung des Hinweises auf die Patenterteilung: **24.02.2010**
(21) Anmeldenummer: 04292812.7
(22) Anmeldetag: 29.11.2004
(51) Int. Cl.: H01B 7/288, H01B 7/29

(54) **Elektrisches Kabel**
Electrical cable
Câble électrique

(43) Veröffentlichungstag der Anmeldung: 07.06.2006
(73) Patentinhaber: Nexans, 75008 Paris (FR)
(72) Erfinder: Grögl, Ferdinand, 90403 Nürnberg (DE); Mann, Thomas, 91367 Weissenohe (DE)
(74) Vertreter: Döring, Roger

(56) Entgegenhaltungen:
- EP-A- 0 540 815
- EP-A- 1 128 396
- DE-A1- 3 120 325
- DE-A1- 4 335 147
- DE-U1- 9 111 292
- DE-U1- 20 013 951
- US-B1- 6 173 100

## Beschreibung

Die Erfindung bezieht sich auf ein elektrisches Kabel gemäß dem Oberbegriff des Patentanspruchs 1 (DE 201 09 974 U1).

Ein derartiges Kabel wird beispielsweise zum Verbinden von ortsveränderlichen Geräten mit einer Spannungs- bzw. Signalquelle eingesetzt. Bei den aus einem von einer Isolierung umgebenen Leiter bestehenden Adern des Kabels handelt es sich demnach um Energieadern und/oder Nachrichten- bzw. Signaladern. Ortsveränderliche Geräte können beispielsweise Kräne, Werkzeugmaschinen und insbesondere Roboter sein. Ein solches Kabel muß mechanisch belastbar sein, mit einer auf lange Zeit gleichbleibenden Biegefestigkeit. Es soll auch in einem weiten Temperaturbereich flexibel bleiben, der beispielsweise zwischen -40 °C und +80 °C liegt.

Aus dem DE 91 11 292 U1 geht ein Mittel- oder Hochspannungskabel hervor, das einen von einer inneren Leitschicht umgebenden Leiter, eine über der Leitschicht angebrachte Isolierung und eine dieselbe umschließende äußere Leitschicht hat, auf die eine Drahtlage aufgeseilt ist. Die Drahtlage ist von einer Querleitwendel umgeben. In den Zwischenräumen zwischen den Drähten der Drahtlage ist unter der Einwirkung von Feuchtigkeit quellendes Material angebracht. Die Drahtlage mit Querleitwendel ist von einer aus metallbeschichteten Kunststoffbändern bestehenden Bandbewicklung umgeben. Über der Bandbewicklung ist als Außenmantel ein eine metallische Einlage aufweisender Schichtenmantel angeordnet.

Die US 6,173,100 B1 beschreibt ein elektrisches Kabel, das in seinem Aufbau wassersperrende und flammbeständige Bänder aufweist. Das Kabel hat eine Kabelseele und einen Außenmantel aus Kunststoff. Zwischen Kabelseele und Außenmantel ist eine Schicht angebracht, die eine Lage oder mehrere Lagen eines aus Kunststoff bestehenden wassersperrenden Bandes enthält, durch welches die Kabelseele gegen das Eindringen von Wasser geschützt ist. Das Band kann auch flammbeständig ausgeführt sein.

Bei dem bekannten Kabel nach dem eingangs erwähnten DE 201 09 974 U1 sind in den Zwickeln von Adern Füllelemente aus Kunststoff angeordnet. Sie sind zusammen mit den Adern zu einer Einheit verseilt, die von einem Mantel aus Isoliermaterial umgeben ist. Durch die Verseilung der Adern miteinander sollen die Wirkung von externen Magnetfeldern reduziert sowie die elektromagnetische Verträglichkeit, die Einstrahlfestigkeit und die Störsicherheit erhöht werden. Über den Aufbau des Mantels sind der Druckschrift keine Angaben zu entnehmen. Das gilt auch bezüglich seines Verhaltens bei hohen Temperaturen und bei einem Kontakt mit heißen, insbesondere glühenden Partikeln.

Der Erfindung liegt die Aufgabe zugrunde, das eingangs geschilderte Kabel so zu gestalten, daß es auch beim Auftreffen von glühenden Partikeln seine Funktion ohne Einschränkung beibehält.

Diese Aufgabe wird entsprechend den kennzeichnenden Merkmalen des Patentanspruchs 1 gelöst.

Das Band aus flammfestem Material umgibt die aus Adern und Mantel bestehende Seele des Kabels, welche durch den eine Mindestwandstärke von 0,5 mm aufweisenden Mantel in sich voll funktionsfähig ist. Durch das Band aus flammfestem Material ist für die Seele des Kabels eine Barriere für glühende Partikel, wie beispielsweise Schweißperlen, realisiert, welche die Seele wirksam gegenüber derartigen Partikeln schützt, wenn dieselben den Außenmantel des Kabels durchdrungen haben. In durch die Partikel im Außenmantel entstandene Löcher kann zwar Feuchtigkeit eindringen, sie wird aber durch die über dem Band aus flammfestem Material angebrachte Schicht aus dem bei Feuchtigkeitszutritt quellenden Material abgeblockt. Die Feuchtigkeit kann sich daher nicht in Längsrichtung des Kabels ausbreiten, so daß dessen Funktionsfähigkeit auch in Verbindungsmuffen erhalten bleibt.

Ausführungsbeispiele des Erfindungsgegenstandes sind in den Zeichnungen dargestellt.

Es zeigen:
- Fig. 1: einen Querschnitt durch ein Kabel nach der Erfindung.
- Fig. 2: einen Querschnitt durch ein gegenüber Fig. 1 ergänztes Kabel.

Das in der Zeichnung dargestellte Kabel hat drei miteinander verseilte Adern 1, die jede aus einem von einer Isolierung 2 umgebenen elektrischen Leiter 3 besteht. Die Anzahl der Adern 1 und ihre Ausführungsformen sind variabel. Es kann sich also beispielsweise um Energieadern und um Adern zur Signal- und/oder Datenübertragung handeln. Die einzelnen Adern 1 können zur Erhöhung der Störsicherheit auch geschirmt ausgeführt sein. Die Isolierung 2 kann beispielsweise aus einem Polyolefin, aus einem thermoplastischen Elastomer (TPE) oder aus vernetzbaren Polymeren bestehen, die strahlenvernetzbar oder mit dem CV-Verfahren vernetzbar sind. In der Regel sind zumindest alle erwähnten Adertypen in einem Kabel enthalten, das beispielsweise als Anschlußkabel für Schweißroboter eingesetzt wird.

In den Zwickeln zwischen den Adern 1 können Füllelemente 4 angebracht sein, damit sich insgesamt ein etwa kreisförmiger Aufbau ergibt. Adern 1 und Füllelemente 4 sind von einem Mantel 5 aus Isoliermaterial umgeben, dessen Wandstärke mindestens 0,5 mm beträgt. Der Mantel 5 wird mittels eines Extruders aufgebracht. Er besteht vorzugsweise aus einem halogenfreien thermoplastischen Material oder aus TPE. Für den Mantel 5 kann auch ein vernetzbares Polymer eingesetzt werden, das strahlenvernetzbar oder mit dem CV-Verfahren vernetzbar ist. Das aus Adern 1 und Mantel 5 bestehende Kabel ist für seinen Verwendungszweck grundsätzlich ohne weitere Elemente verwendbar.

Über dem Mantel 5 ist beim Kabel nach der Erfindung ein Band 6 aus einem flammfesten Material angebracht, das in mindestens einer Lage mit überlappenden Kanten um den Mantel 5 herumgewickelt ist. Das Band 6 kann mit Vorteil aus einem Glas- oder Keramikfasergewebeband oder auch aus einem Glas/Silikon/Glimmerband bestehen, das im Handel als "Mica-Band" erhältlich ist. Es bildet um den Mantel 5 herum eine geschlossene Umhüllung, die gegen glühende Partikel beständig ist, beispielsweise gegen Schweißperlen. Das Band 6 ist damit für das umschlossene Kabel eine wirksame Barriere, die keine glühenden Partikel durchläßt.

Die durch das Band 6 gebildete Umhüllung ist von einer Schicht 7 aus einem bei Feuchtigkeitszutritt quellenden Material umgeben. Dazu kann beispielsweise ein bandförmiges Material aus einem Polyestervlies mit Quellbeschichtung verwendet werden, das um das Band 6 herumgewickelt ist. Für die Schicht 7 kann auch ein Band aus Polyacrylat mit einer Quellbeschichtung aus einem Polyvinylalkohol, einem synthetischen Superabsorber und einem Korrosionsinhibitor eingesetzt werden. Durch die Schicht 7 wird Feuchtigkeit abgeblockt, die gegebenenfalls bei einer Beschädigung der dieselbe umgebenden Schichten des Kabels durch die beschädigten Stellen hindurchtreten kann. Die Schicht 7 verhindert dann, daß sich die Feuchtigkeit in Längsrichtung des Kabels ausbreiten kann. Sie kann damit insbesondere nicht bis zu Verbindungsmuffen gelangen.

Aus Sicherheitsgründen kann vor dem Aufbringen des Bandes 6 über dem Mantel 5 eine innere Schicht aus bei Feuchtigkeitszutritt quellendem Material angebracht sein. Eine solche Schicht kann dann von Bedeutung sein, wenn eine Beschädigung der das Band 6 umgebenden Schichten gerade an einer Überlappungsstelle desselben auftritt. Durch die Überlappungsstelle dann gegebenenfalls hindurchtretende Feuchtigkeit wird durch die innere Schicht abgeblockt.

Über der Schicht 7 ist ein Außenmantel 8 angeordnet, der mittels eines Extruders aufgebracht wird. Er besteht in der Regel aus einem flammwidrigen, halogenfreien Isoliermaterial, wie beispielsweise Polyuretan. Es kann aber auch ein anderes vernetzbares oder nicht vernetzbares Polymercompound für den Außenmantel 8 eingesetzt werden.

Die Schicht 7 kann zusätzlich von einem Torsionsschutz in Form eines Garngeflechts umgeben sein, das beim Extrudieren des Außenmantels 8 in das Material desselben eingebettet wird.

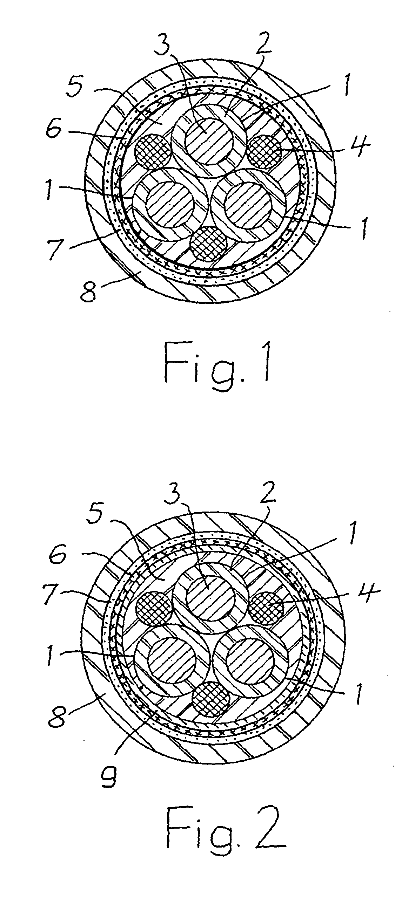

Das Kabel nach der Erfindung kann gemäß Fig. 2 zu seiner elektrisch wirksamen Schirmung mit einem Schirm 9 ausgerüstet sein, der beispielsweise durch ein Geflecht oder eine Umseilung aus Kupferdrähten realisiert ist. Der Schirm 9 ist gemäß Fig. 2 auf den Mantel 5 aufgebracht. Er ist - analog zu Fig. 1 - von dem Band 6 aus flammfestem Material, der quellfähigen Schicht 7 und dem Außenmantel 8 umgeben.

## Patentansprüche

1. Elektrisches Kabel mit mindestens zwei miteinander verseilten elektrischen Adern (1), die jede aus einem von einer Isolierung (2) umgebenen elektrischen Leiter (3) besteht, und einem dieselben umgebenden Mantel (5) aus Isoliermaterial,
**dadurch gekennzeichnet,**
- **daß** über dem Mantel (5), der eine Wandstärke von mindestens 0,5 mm hat, eine Barriere in Form eines mit Überlappung in mindestens einer Lage aufgewickelten Bandes (6) aus einem flammfesten, gegen glühenden Partikeln beständigen Material angebracht ist und
- **daß** über dem Band (6) eine Schicht (7) aus einem bei Feuchtigkeitszutritt quellenden Material angebracht ist, welche von einem Außenmantel (8) aus Isoliermaterial umgeben ist.

2. Kabel nach Anspruch 1, **dadurch gekennzeichnet, daß** der Mantel (5) aus einem halogenfreien thermoplastischen Isoliermaterial besteht.

3. Kabel nach Anspruch 1, **dadurch gekennzeichnet, daß** der Mantel (5) aus einem thermoplastischen Elastomer besteht.

4. Kabel nach Anspruch 1, **dadurch gekennzeichnet, daß** der Mantel (5) aus einem vernetzbaren Isoliermaterial besteht.

5. Kabel nach einem der Ansprüche 1 bis 4, **dadurch gekennzeichnet, daß** das Band (6) als Glas/Silikon/Glimmerband ausgeführt ist.

6. Kabel nach einem der Ansprüche 1 bis 4, **dadurch gekennzeichnet, daß** das Band (6) als Glas- oder Keramikfasergewebeband ausgeführt ist.

7. Kabel nach einem der Ansprüche 1 bis 6, **dadurch gekennzeichnet, daß** die Schicht (7) aus dem bei Feuchtigkeitszutritt quellenden Material als bandförmiges Material aus einem mit einer Quellbeschichtung versehenen Polyestervlies ausgeführt ist.

8. Kabel nach einem der Ansprüche 1 bis 6, **dadurch gekennzeichnet, daß** die Schicht (7) aus dem bei Feuchtigkeitszutritt quellenden Material als bandförmiges Material aus einem mit einer Quellbeschichtung versehenen Polyacrylat ausgeführt ist.

9. Kabel nach einem der Ansprüche 1 bis 8, **dadurch gekennzeichnet, daß** über dem Mantel (5) ein als Geflecht oder Umseilung aus Kupferdrähten ausgeführter Schirm (9) angebracht ist.

10. Kabel nach einem der Ansprüche 1 bis 9, **dadurch gekennzeichnet, daß** der Außenmantel (8) aus einem flammwidrigen, halogenfreien Isoliermaterial besteht.

## Claims

1. Electricalcable with at least two electrical conductors (1), which are stranded together, and each of which has an electrical wire (3) which is surrounded by an insulation (2), and a sheath (5) ofinsulating material that encloses the conductors (1), **characterized in**
- **that** the sheath (5), which has a wall thickness of at least 0,5 mm, is covered with a barrier in the form of a ribbon (6), which is wound in at least one layer with over lapping edges,consisting of a material, which is flame proof and resistant against red-hot particles and
- **that** the ribbon (6) is covered with a layer (7) ofa material that swells when exposed to moisture and which is surrounded by an outer sheath (8) of insulating material.

2. Cable according to claim 1, **characterized in that** the sheath (5) comprises a halogen-free thermoplastic insulating material.

3. Cable according to claim 1, **characterized in that** the sheath (5) comprises a thermoplastic elastomer.

4. Cable according to claim 1, **characterized in that** the sheath (5) comprises a crosslinkable insula ting material.

5. Cable according to one ofthe claims 1 to 4, **characterized in that** the strip (6) is realized as a glass/silic on/mica strip.

6. Cable according to one ofthe claims 1 to 4, **characterized in that** the strip (6) is realized as a glass-fiberorceramic-fiberfabric strip.

7. Cable according to one ofthe claims 1 to 6, **characterized in that** the layer (7) of the material that swells when exposed to moisture is realized as a strip-like material made of a nonwoven polyester with a swelling barrier coating.

8. Cable according to one ofthe claims 1 to 6, **characterized in that** the layer (7) of the material that swells when exposed to moisture is realized as a strip-like material made of a polyacrylate with a swelling barrier coating.

9. Cable according to one ofthe claims 1 to 8, **characterized in that** a shield (9) that is realized as a braided fabric or as stranded copper wires is applied over the sheath (5).

10. Cable according to one of the claims 1 to 9, **characterized in that** the outer sheath(8) comprises a flame-resistant, halogen-free insulating material.

## Revendications

1. Câble électrique qui présente :
au moins deux fils électriques (1) torsadés l'un avec l'autre, constitués tous deux de conducteurs électriques (3) entourés par une isolation (2), et
une enveloppe (5) en matériau isolant qui entoure les conducteurs,
**caractérisé en ce que**
- une barrière qui présente la forme d'un ruban (6) en matériau résistant aux flammes et aux particules incandescentes, enroulé en au moins une couche avec superposition, est placée au-dessus de l'enveloppe (5) dont la paroi a une épaisseur d'au moins 0,5 mm et
- **en ce qu'**une couche (7) en un matériau qui gonfle en cas de pénétration d'humidité et qui est entourée par une enveloppe extérieure en matériau isolant est appliquée au-dessus du ruban (6).

2. Câble selon la revendication 1, **caractérisé en ce que** l'enveloppe (5) est constituée d'un matériau isolant thermoplastique non halogéné.

3. Câble selon la revendication 1, **caractérisé en ce que** l'enveloppe (5) est constituée d'un élastomère thermoplastique.

4. Câble selon la revendication 1, **caractérisé en ce que** l'enveloppe (5) est constituée d'un matériau isolant réticulable.

5. Câble selon l'une des revendications 1 à 4, **caractérisé en ce que** le ruban (6) est configuré sous la forme d'un ruban de verre/silicone/mica.

6. Câble selon l'une des revendications 1 à 4, **caractérisé en ce que** le ruban (6) est configuré sous la forme d'un ruban tissé de fibres de verre ou de céramique.

7. Câble selon l'une des revendications 1 à 6, **caractérisé en ce que** la couche (7) en un matériau qui gonfle en cas de pénétration d'humidité est configurée comme matériau en bande constitué d'un feutre de polyester doté d'un revêtement gonflant.

8. Câble selon l'une des revendications 1 à 6, **caractérisé en ce que** la couche (7) en un matériau qui gonfle en cas de pénétration d'humidité est configurée sous la forme d'un matériau en bande constitué d'un polyacrylate doté d'un revêtement gonflant.

9. Câble selon l'une des revendications 1 à 8, **caractérisé en ce qu'**un écran (9) configuré comme treillis ou torsade de fils de cuivre est appliqué au-dessus de l'enveloppe (5).

10. Câble selon l'une des revendications 1 à 9, **caractérisé en ce que** l'enveloppe extérieure (8) est constituée d'un matériau isolant résistant aux flammes et non halogéné.
